(19) **Europäisches Patentamt European Patent Office Office européen des brevets**

(11) **EP 4 531 225 A1**

(12) **EUROPEAN PATENT APPLICATION**
published in accordance with Art. 153(4) EPC

(43) Date of publication:
**02.04.2025 Bulletin 2025/14**

(21) Application number: **23822646.8**

(22) Date of filing: **13.02.2023**

(51) International Patent Classification (IPC):
$H02J\ 3/12^{(2006.01)}$ $\quad H02J\ 3/06^{(2006.01)}$
$H02M\ 5/12^{(2006.01)}$

(52) Cooperative Patent Classification (CPC):
Y02E 40/30

(86) International application number:
**PCT/CN2023/075686**

(87) International publication number:
**WO 2023/241074 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 CN 202210691872**

(71) Applicants:
- **State Grid Smart Grid Research Institute Co., Ltd.
  Beijing 102209 (CN)**
- **Fuxin Power Supply Company Of State Grid Liaoning
  Electric Power Co., Ltd.
  Fuxin, Liaoning 123099 (CN)**
- **State Grid Corporation of China
  Beijing 100031 (CN)**

(72) Inventors:
- **ZHAO, Guoliang
  Beijing 102209 (CN)**
- **QIAO, Guangyao
  Beijing 102209 (CN)**
- **LI, Weiguo
  Beijing 102209 (CN)**
- **ZHAO, Yongbin
  Beijing 102209 (CN)**

- **JIN, Yanjiao
  Beijing 102209 (CN)**
- **SUN, Qinghao
  Beijing 102209 (CN)**
- **XU, Yunfei
  Beijing 102209 (CN)**
- **LIU, Haijun
  Beijing 102209 (CN)**
- **LI, Fangyi
  Beijing 102209 (CN)**
- **SHI, Qiuyu
  Beijing 102209 (CN)**
- **SUN, Geng
  Beijing 102209 (CN)**
- **WANG, Dan
  Beijing 102209 (CN)**
- **LI, Lu
  Beijing 102209 (CN)**
- **YANG, Zhichang
  Beijing 102209 (CN)**
- **ZHANG, Xiaoyu
  Beijing 102209 (CN)**

(74) Representative: **Mathys & Squire
The Shard
32 London Bridge Street
London SE1 9SG (GB)**

(54) **FLEXIBLE POWER TRANSFORMER**

(57) Provided in the embodiments of the present application is a flexible power transformer. The flexible power transformer comprises a main transformer and a converter apparatus, wherein the main transformer comprises a primary-side winding and a plurality of secondary-side windings; the converter apparatus is connected in series between a tail end of the primary-side winding of the main transformer and a tail end of any secondary-side winding of the main transformer, or the converter apparatus is connected in series between tail ends of any two secondary-side windings of the main transformer; and the converter apparatus is used for adjusting the voltage of each winding of the main transformer by means of adjusting the output voltage of the converter apparatus. In the embodiments of the present application, the function of adjusting the voltage of each winding of a trans-

**(Cont. next page)**

EP 4 531 225 A1

former can be realized without changing the turn ratio of the transformer. Moreover, a voltage-source-type converter is combined with a power transformer, so as to realize rapid, continuous, accurate and flexible adjustment of the output electrical quantity of the transformer by means of a converter with a relatively small capacity.

**FIG. 1**

**Description**

CROSS-REFERENCE TO RELATED APPLICATION

The application is based on and claims priority to Chinese patent application No. 202210691872.1 filed on June 17, 2022 and entitled "FLEXIBLE POWER TRANSFORMER", the contents of which are hereby incorporated by reference in its entirety.

TECHNICAL FIELD

The present application relates to the field of electrical devices of the power system, and in particular to a flexible power transformer.

BACKGROUND

Under the background of "dual carbon", China has proposed to build a new power system with the new energy as the main body. Cleanliness of the structure of the power supply and power grid is accelerated, the grid-connected scale of new energy units gradually increase, and multiple ultra-high voltage alternating current (AC) and direct current (DC) projects are put into operation in succession. In the new power system, there are prominent problems that the power and voltage change rapidly and frequently, and the high/low voltage exceeds the limits, which are caused by factors such as large-scale replacement of conventional power supplies by volatile new energy, structure changes of the power grid frame, and load changes. Therefore, the ability of accepting a new energy power grid with high permeability and the long-distance transmission of the power grid are limited, which is not conducive to improving the quality of the power supply and reducing line losses. The safe, stable and economic operation of the power system is under great pressure, and it is urgent to improve the operation flexibility and regulation ability of the power grid.

The power transformer is the central node of electrical energy transmission and connects different voltage levels. The regional voltage may be affected by adjusting the voltage of the transformer. The conventional voltage adjustment manner of the power transformer is mainly the mechanical loaded voltage adjustment, which may play the role of regional voltage adjustment in the power grid with the conventional synchronous generator as the main body. In the new power system, the connection of large-scale new energy and power electronic devices proposes the requirement of rapid and continuous voltage adjustment on the system. However, the mechanical loaded voltage adjustment transformer does not have the ability of continuous voltage adjustment, and the mechanical tap-changer has a slow adjustment speed and does not have the function of automatically adjusting the voltage. In addition, when the reactive power of the system is insufficient, by means of adjusting the tap joint of the transformer, only the voltage at the point where the transformer is located can be adjusted, and voltages in other regions are further reduced due to shortage of the reactive power, which can not adapt to the voltage adjustment requirement of the new power system with the new energy as the main body.

In order to improve the consumption ability to the new energy of the new power system, maintain the voltage of the power grid to be stable, and improve the electrical energy quality of the power grid supply, it is urgent to carry out the research on the flexible power transformer technology in which the active part of the power electronics combines with the conventional electromagnetic transformers, so as to ensure the safe and reliable operation of the new energy power system with the new energy as the main body.

SUMMARY

In order to achieve the rapid, continuous and accurate adjustment of the voltage of the AC power transformer, improve the consumption ability to the new energy of the new power system, and ensure the reliable operation of the power grid, the present application provides a flexible power transformer.

To achieve the above purpose, the present application provides the following technical solution.

An embodiment of the present application provides a flexible power transformer. The flexible power transformer includes at least a main transformer and a converter apparatus. The main transformer includes a primary winding and multiple secondary windings. The converter apparatus is connected in series between an end of the primary winding of the main transformer and an end of any one of the multiple secondary windings of the main transformer, or the converter apparatus is connected in series between ends of any two of the multiple secondary windings of the main transformer. The converter apparatus is configured to adjust a voltage of each winding of the main transformer by adjusting an output voltage of the converter apparatus.

In some embodiments, the converter apparatus may include multiple cascaded subunits. The subunits are configured to adjust an output voltage level of the converter apparatus by changing a number of the cascaded subunits.

In some embodiments, the converter apparatus may be configured to control a port voltage and a power flow of the flexible power transformer by controlling an amplitude and a phase of an output voltage on the inverter side of the converter apparatus.

In some embodiments, for each of the cascaded subunits, the subunit may include a rectifier module, a dual active bridge module with a high-frequency isolation transformer, and an inverter module. An input end of the rectifier module is connected to any one of the multiple secondary windings, and an output end of the rectifier module is connected to an input end of the dual active bridge module with the high-frequency isolation transformer. An input end of the inverter module is connected to an output end of the dual active bridge module with the high-frequency isolation transformer, and an output end of the inverter module is connected to an end of another one of the multiple secondary windings or the end of the primary winding.

The rectifier module is configured to rectify an AC voltage provided by the secondary winding into a DC voltage, and maintain a DC voltage of each module in the converter apparatus to be stable.

The dual active bridge module with the high-frequency isolation transformer is configured to perform a DC voltage conversion, transmit a converted DC voltage to the inverter module, and electrically isolate each module in the converter apparatus.

The inverter module is configured to invert the converted DC voltage to an AC voltage, and transmit the AC voltage to the end of the another one of the multiple secondary windings or the end of the primary winding.

In some embodiments, the inverter module may further be configured to change a voltage of the primary winding of the main transformer and a voltage of each secondary winding of the main transformer by controlling a phase and an amplitude of the output voltage of the inverter module.

In some embodiments, the dual active bridge module with the high-frequency isolation transformer may have multiple ports. The multiple ports are configured to provide multiple power exchange interfaces outward.

In some embodiments, an operating frequency of a high-frequency transformer in the dual active bridge module with the high-frequency isolation transformer may be determined by a capacity, an occupation, and characteristics of an adopted power component of the converter apparatus.

In some embodiments, the output end of the inverter module may be connected in series between the end of the winding and a neutral point.

In some embodiments, the flexible power transformer may further include a bypass apparatus connected in parallel at both ends of an inverter side of the converter apparatus.

In some embodiments, the bypass apparatus may include an anti-parallel thyristor and a mechanical switch.

The technical solution of the present application has the following advantages.

The flexible power transformer provided by the present application includes a main transformer and a converter apparatus. The main transformer includes a primary winding and multiple secondary windings. The converter apparatus is connected in series between the end of the primary winding of the main transformer and the end of any one of the multiple secondary windings of the main transformer, or the converter apparatus is connected in series between the ends of any two of the multiple secondary windings of the main transformer. The voltage of each winding of the main transformer is adjusted by adjusting the output voltage of the converter apparatus. The converter apparatus is connected in series between the end of the primary winding of the main transformer and the end of any one of the multiple secondary windings of the main transformer, or the converter apparatus is connected in series between the ends of any two of the multiple secondary windings of the main transformer. The voltage of each winding of the main transformer is adjusted by adjusting the output voltage of the converter apparatus. The function of the adjustment of the voltage of each winding of the transformer may be achieved without changing the turn ratio of the transformer. In addition, the voltage source converter is combined with the power transformer to achieve the rapid, continuous, accurate and flexible adjustment of the output electrical quantity of the transformer with a converter having a smaller capacity, which has the advantages of arc-free switching, flexible control and fast response speed. In addition to controlling the voltage, it may also assist in controlling the power flow of the transformer.

BRIEF DESCRIPTION OF THE DRAWINGS

In order to illustrate the technical solution in the specific implementations of the present application or in the related art more clearly, drawings needed to be used in the description of the specific implementations or the related art would be briefly introduced below. It is apparent that the drawings described below are some implementations of the present application. For those of ordinary skill in the art, other drawings may also be obtained from these drawings without creative labor.

FIG. 1 is a schematic diagram of a specific example of a flexible power transformer according to an embodiment of the present application.

FIG. 2 is a schematic diagram of another specific example of a flexible power transformer according to an embodiment of the present application.

FIG. 3 is a diagram of a specific wiring of a flexible power transformer according to an embodiment of the present application.

FIG. 4 is a wiring form of a high-frequency isolation transformer according to an embodiment of the present application.

FIG. 5 is a diagram of a phasor relationship of voltage adjustment of a flexible power transformer according to an embodiment of the present application.

FIG. 6 is an equivalent circuit of a flexible power transformer performing power flow adjustment according to an embodiment of the present application.

DETAILED DESCRIPTION

The technical solution of the present application will be clearly and completely described in combination with the drawings below. It is apparent that the described embodiments are a part of the embodiments of the present application, and not all the embodiments. Based on the embodiments in the present application, all other embodiments obtained by those of ordinary skill in the art without creative labor fall within the scope of protection of the present application.

In the description of the present application, it is to be noted that the orientation or position relationship indicated by terms "center", "up", "down", "left", "right", "vertical", "horizontal", "inside", "outside", or the like, are based on the orientation or position relationship shown in the drawings, which are only for facilitating the description of the present application and simplifying the description, instead of indicating or implying that the apparatus or element referred to must have a particular orientation, or be constructed and operated in a particular orientation, and thus cannot be understood as a limitation on the present application. In addition, terms "first" "second" and "third" are only for descriptive purposes and can not be understood as indicating or implying a relative importance.

In the description of the present application, it is to be noted that, unless otherwise explicitly specified and limited, terms "install", "link" and "connect" shall be understood broadly, and for example, may be a fixed connection, a detachable connection, or an integrated connection; may be a mechanical connection or an electrical connection; may be a direct connection, an indirect connection through an intermediate medium, or an internal connection between two elements; may be a wireless connection or a wired connection. For those of ordinary skill in the art, the specific meaning of the above terms in the present application may be understood according to specific conditions.

In addition, technical features referred to in different implementations of the present application described below may be combined as long as they do not conflict with each other.

An embodiment of the present application provides a flexible power transformer including a main transformer 1 and a converter apparatus 2. The main transformer 1 includes a primary winding and multiple secondary windings. The converter apparatus 2 is connected in series between the end of the primary winding of the main transformer 1 and the end of any one of the multiple secondary windings of the main transformer 1, or the converter apparatus 2 is connected in series between the ends of any two of the multiple secondary windings of the main transformer 1. The voltage of each winding of the main transformer 1 is adjusted by adjusting the output voltage of the converter apparatus 2.

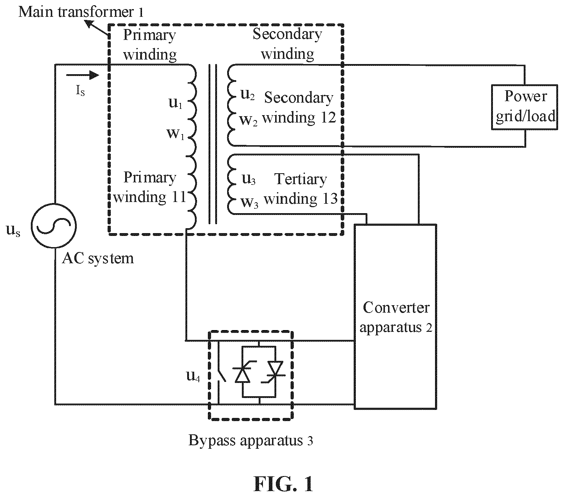

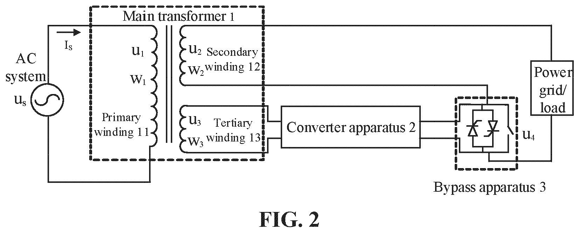

In some embodiments, as shown in FIG. 1 or FIG. 2, a case where the main transformer 1 includes a primary winding 11, a secondary winding 12, and a tertiary winding 13 is taken as an example for illustration. Here, the primary winding 11 is located on the primary side of the main transformer 1, and the secondary winding 12 and the tertiary winding 13 are located on the secondary side of the main transformer 1. An AC system is connected to the primary winding 11 of the main transformer 1 to supply power to the main transformer 1. The tertiary winding 13 is configured to supply power to the converter apparatus 2.

In some embodiments, the primary winding 11 cooperates with the secondary winding 12 to complete a voltage conversion process. Here, the secondary winding 12 is responsible for outputting the voltage to supply energy to the lower-level line (i.e., the power grid) or the load. The tertiary winding 13 is connected to the input end of the converter apparatus 2, and the tertiary winding 13 provides active power support for the converter apparatus 2.

As shown in FIG. 1, the converter apparatus 2 is connected in series between the end of the primary winding 11 of the main transformer 1 and the tertiary winding 13 of the main transformer 1. Here, voltages at both ends of the primary winding 11 may be adjusted by adjusting the output voltage of the converter apparatus 2, and the output voltage of the secondary winding 12 may be synchronously changed, so as to achieve the rapid, continuous and accurate adjustment of the amplitude and phase of the voltage of the main transformer 1. In such case, each of the primary winding 11 and the tertiary winding 13 is of a star connection. The connection of the secondary winding 12 is not required, which may be flexibly selected according to the connection manner of the conventional power transformer based on application requirements of different scenarios.

As shown in FIG. 2, the converter apparatus 2 is connected in series between the end of the secondary winding 12 of the main transformer 1 and the tertiary winding 13 of the main transformer 1. Here, voltages at both ends of the secondary winding 12 may be adjusted by adjusting the output voltage of the converter apparatus 2, and the voltages at both ends of the primary winding 11 may be synchronously changed, so as to achieve the rapid, continuous and accurate adjustment of the amplitude and phase of the voltage of the main transformer 1. In such case, each of the secondary winding 12 and the tertiary winding 13 is of the star connection. The connection of the primary winding 11 is not required, which may be flexibly selected according to the connection manner of the conventional power transformer based on application requirements of different scenarios.

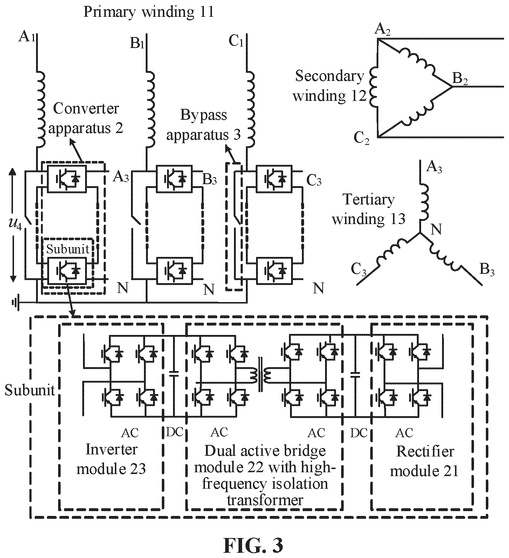

In the embodiments of the present application, as shown in FIG. 3, the converter apparatus 2 with flexible adjustable voltage amplitude and phase may be connected in series between the end of the winding of the star connection of the power transformer and the center point (or the ground) of the star connection of the power transformer. The voltage of each winding of the main transformer 1 may be changed by adjusting the converter apparatus 2, so as to replace the conventional mechanical transformer for the voltage adjustment and provide a certain phase shifting function. In addition, the tertiary winding provides active power support for the converter apparatus 2, which achieves comprehensive functions of flexible control of the voltage/power flow, flexible port expansion and electrical energy quality compensation of the power transformer.

The present application provides a flexible power transformer. The converter apparatus is connected in series between the end of the primary winding of the main transformer and the end of any one of the multiple secondary windings of the main transformer, or the converter apparatus is connected in series between the ends of any two of the multiple secondary windings of the main transformer. The function of the adjustment of the voltage of each winding of the transformer may be achieved without changing the turn ratio of the transformer. In addition, the voltage source converter is combined with the power transformer to achieve the rapid, continuous, accurate and flexible adjustment of the output electrical quantity of the transformer with a converter having a smaller capacity. When the converter apparatus fails, the bypass apparatus bypasses the converter apparatus, and the main transformer may continue to operate normally. The flexible power transformer has advantages of arc-free switching, flexible control, fast response speed, low cost and high reliability.

In some embodiments, as shown in FIG. 3, the converter apparatus 2 includes multiple cascaded subunits. The output voltage level of the converter apparatus may be adjusted by changing the number of the cascaded subunits.

In some embodiments, the converter apparatus 2 is achieved by multiple cascaded subunits, which can be applied to different voltage levels by changing the number of the cascaded subunits. In addition, the multiple cascaded subunits may achieve a multi-level inverter, reduce the harmonic content injected into the system, and is easy to expand, which may achieve an application of multiple voltage levels. With fully controlled power electronic components as the core, the subunit makes the amplitude and phase of the output voltage flexible and controllable, which greatly improves the response speed of on-load voltage adjustment, and may achieve long-term continuous operation, thereby providing a new solution for the voltage fluctuation problem caused by continuous fluctuation of the new energy.

In the embodiments of the present application, for each of the cascaded subunits, the subunit includes a rectifier module 21, a dual active bridge module 22 with a high-frequency isolation transformer, and an inverter module 23. Here, the input end of the rectifier module 21 is connected to any one of the multiple secondary windings, and the output end of the rectifier module 21 is connected to the input end of the dual active bridge module 22 with the high-frequency isolation transformer. The input end of the inverter module 23 is connected to the output end of the dual active bridge module 22 with the high-frequency isolation transformer, and the output end of the inverter module 23 is connected to the end of another one of the multiple secondary windings or the end of the primary winding. Here, the rectifier module 21 is configured to rectify an AC voltage provided by the secondary winding connected to the rectifier module 21 into a DC voltage, and maintain the DC voltage of each module in the converter apparatus 2 to be stable. The dual active bridge module 22 with the high-frequency isolation transformer is configured to perform a DC voltage conversion, transmit the converted DC voltage to the inverter module 23, and electrically isolate each module in the converter apparatus 2. The inverter module 23 is configured to invert the converted DC voltage to an AC voltage, and transmit the AC voltage to the end of the another one of the multiple secondary windings or the end of the primary winding.

Specifically, as shown in FIG. 3, a case where the converter apparatus 2 is connected in series between the end of the primary winding 11 of the main transformer 1 and the tertiary winding 13 of the main transformer 1 is taken as an example for illustration. The input end of the rectifier module 21 is connected to the tertiary winding 13, and the output end of the rectifier module 21 is connected to the input end of the dual active bridge module 22 with the high-frequency isolation transformer. The output end of the dual active bridge module 22 with the high-frequency isolation transformer is connected to the input end of the inverter module 23. The output end of the inverter module 23 is connected to the end of the primary winding 11.

Here, the tertiary winding 13 maintains the DC voltage in each module of the subunit to be stable through the rectifier module 21.

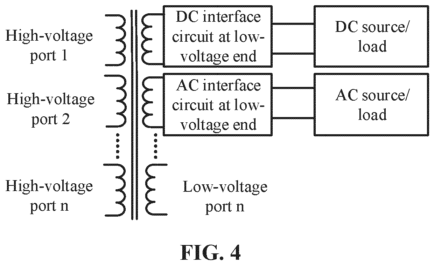

Here, the dual active bridge module 22 with the high-frequency isolation transformer has a function of DC voltage conversion, and achieves electrical isolation of each module in the subunit, which ensures scalability of the voltage level and the capacity of the flexible power transformer. The dual active bridge module 22 with the high-frequency isolation transformer may adopt a multi-port design and provide multiple power exchange interfaces outward, so as to achieve energy interaction between the main transformer, and DC power supplies and low-voltage AC and DC loads such as distributed photovoltaic and energy storage, which provides a convenient channel for access of distributed energy and energy supply of low-voltage loads around the high-voltage transformer substation, and makes operation of the whole device more flexible and reliable. As shown in FIG. 4, the dual active bridge module 22 with the high-frequency isolation transformer includes n high-voltage ports and n low-voltage ports, and the number of ports may be flexibly expanded. One of the low-voltage ports is connected to the DC interface circuit at the low-voltage end, and another one of the low-voltage ports is connected to the AC interface circuit at the low-voltage end. The AC interface circuit at the low-voltage end and the DC interface circuit at the low-voltage end provide interfaces for the external AC and DC distributed power supply and loads to achieve the energy exchange between the main transformer, and the external power supply and loads. Port expansion of high and low voltages as well as AC and DC is easier and the operation manner is flexible and efficient.

In some embodiments, the high-frequency isolation transformer is adopted in the dual active bridge module 22 with the high-frequency isolation transformer, which greatly reduces the volume of the converter apparatus 2, making it possible to integrate the converter apparatus 2 into the transformer box and facilitating engineering applications. The operating frequency of the high-frequency isolation transformer is determined by the insulation level, capacity, occupation, and characteristics of the adopted power component of the converter apparatus 2.

Multiple inverter modules 23 are cascaded to output a multi-level AC voltage, the amplitude and phase of which may be flexibly adjusted according to the Pulse Width Modulation (PWM) strategy. By connecting the inverter module 23 in series to the end of the primary winding 11, the voltage of each winding may be changed to achieve the purpose of voltage adjustment without changing the turn ratio of the transformer.

In some embodiments, as shown in FIG. 3, the output end of the inverter module 23 is connected in series between the end of the winding and the neutral point. Here, the absolute values of the voltages between the neutral point and the external terminals are equal. When the power supply side (the transformer or generator) or the load side is of a star connection, the common connection point of the head ends (or tail ends) of the three-phase coils is the neutral point, such as point N of the tertiary winding 13 in FIG. 3.

In some embodiments, the coupling manner between the converter apparatus 2 and the main transformer 1 is as follows. The inverter module 23 of the converter apparatus 2 is connected in series between the end of the winding of the star connection of the main transformer 1 and the center point (or the ground) of the star connection of the main transformer 1. Such coupling manner applies to both of a high-voltage transmission system and a three-phase four-wire low-voltage distribution system. The inverter module 23 of the converter apparatus 2 may be connected in series to the end of the high-voltage winding or the end of the low-voltage winding. The inverter module 23 is connected in series between the end of the winding of the star connection of the power transformer and the center point (or the ground) of the star connection of the power transformer, the potential to ground is low, and the insulation requirement is low, which greatly reduces the insulation cost of the converter apparatus.

In the embodiments of the present application, the amplitude and phase of the voltage of the inverter module 23 are flexible and adjustable. The voltage of the primary winding and the voltage of each secondary winding of the main transformer 1 are changed by controlling the phase and amplitude of the output voltage of the inverter module 23. The input end of the converter apparatus 2 has a function of compensating the reactive power or harmonic current for the system through the tertiary energy-acquiring winding (i.e., the tertiary winding 13) while maintaining the DC voltage to be constant.

In some embodiments, when the phase of the voltage of the inverter module 23 is the same as or reverse with the phase of the winding to which the inverter module 23 is connected in series, the function of fast, arc-free and smooth voltage amplitude adjustment may be achieved. When there is an angle difference between the phase of the output voltage of the inverter module 23 and the phase of the winding to which the inverter module 23 is connected in series, the phase angle of the voltage at the inlet side of the main transformer 1 may be changed, such that the power flow of the branch where the flexible power transformer is located is changed, and the power flow is adjusted. The inverter module 23 may have a harmonic voltage compensation function on the basis of achieving the adjustment of the voltage amplitude or phase.

The flexible power transformer may adopt a voltage control mode or a power flow control mode. In the power flow control mode, the port voltage and power flow of the flexible power transformer are controlled by controlling the amplitude and phase of the output voltage on the inverter side of the converter apparatus.

In some embodiments, principles of voltage adjustment and power flow control are as follows. A controllable voltage source is connected in series between the end of the winding of the star connection of the transformer and the center point (or the ground) of the star connection of the transformer. The busbar voltage of the AC system is denoted as $u_S$. The voltage of the primary winding of the transformer is denoted as $u_1$, and the number of turns is denoted as $W_1$. The voltage of the secondary winding is denoted as $u_2$, and the number of turns is denoted as $W_2$. The voltage of the energy-acquiring winding (i.e., the tertiary winding) of the converter is denoted as $u_3$, and the number of turns is denoted as $W_3$. The output voltage of the controllable voltage source is denoted as $u_4$. By adjusting the output voltage $u_4$ of the converter, the voltage adjustment may be achieved. With the equivalent circuit of the flexible power transformer performing the power flow adjustment, the principle of the voltage adjustment is shown as equations (1) and (2).

$$u_s = u_1 + u_4 \qquad (1)$$

$$u_2 = u_1 \times \frac{W_2}{W_1} \qquad (2)$$

According to the above equation (1), it can be known that the voltage $u_1$ at both ends of the primary winding of the transformer may be adjusted by only adjusting the output voltage $u_4$ of the converter without changing the number of turns of the winding. From the equation (2), it can be known that the voltage $u_2$ induced at the side of the secondary winding also changes synchronously with the change of the voltage $u_1$ at both ends of the primary winding.

In some embodiments, the principle of power flow adjustment is shown as equations (3) to (8).

The amplitude of the voltage of the AC system at the sending end is denoted as $U_1$, and the phase angle is 0. The amplitude of the voltage of the AC system at the receiving end is denoted as $U_2$, and the phase angle is denoted as $\delta_2$. By changing the amplitude and phase angle of the output voltage on the inverter side of the converter, the flexible power transformer may further achieve the power flow control for each line of multiple outlet lines. The transformer T1 is equivalent to a reactance X (converted to the primary side), and the part of the back-to-back converter connected in series to the transformer is equivalent to a controlled voltage source $\dot{U}_4$.

The active power P and the reactive power Q transmitted from the AC system to the load are as follows.

$$P = \frac{U_1 U_2}{X} \sin(-\delta_2) \qquad (3)$$

$$Q = \frac{U_1(U_1 - U_2)}{X} \cos(-\delta_2) \qquad (4)$$

The amplitude of the output voltage of the controllable voltage source is denoted as $U_4$, and the phase angle is denoted as $\delta_4$. After the controllable voltage source is injected, the active power $P'$ and the reactive power $Q'$ of the line are respectively as follows.

$$P' = \frac{U_1' U_2}{X} \sin(\varphi - \delta_2) \qquad (5)$$

$$Q' = \frac{U_1'(U_1' - U_2)}{X} \cos(\varphi - \delta_2) \qquad (6)$$

Here, $U_1'$ and $\varphi$ are respectively as follows.

$$U_1' = \sqrt{U_1^2 + U_4^2} \qquad (7)$$

$$\varphi = \arctan\left(\frac{U_4 \sin \delta_4}{U_1 + U_4 \cos \delta_4}\right) \qquad (8)$$

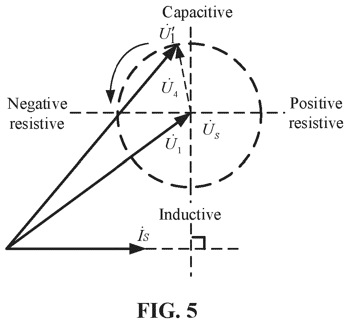

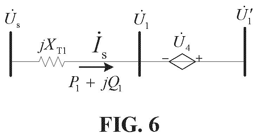

FIG. 5 describes a phasor relationship of the voltage adjustment of the flexible power transformer. FIG. 6 describes an equivalent circuit of the flexible power transformer performing the power flow adjustment.

In some embodiments, as shown in FIG. 1 or FIG. 2, the flexible power transformer further includes a bypass apparatus 3 connected in parallel at both ends of the inverter side of the converter apparatus 2.

In some embodiments, the bypass apparatus 3 includes an anti-parallel thyristor and a mechanical switch. The bypass apparatus 3 consists of the anti-parallel thyristor, the mechanical switch, etc., and the bypass apparatus 3 is connected in parallel at both ends of the inverter side of the converter apparatus 2. When the converter apparatus 2 fails, the output end of the bypass apparatus 3 is short-circuited, and the flexible power transformer operates as a conventional power transformer, which ensures reliability of the device.

It is apparent that the above embodiments are only examples for clear illustration and are not a limitation on the implementations. For those of ordinary skill in the art, other changes or modifications in different forms may further be made based on the above illustration. Here, all the implementations need not to be, and cannot be exhaustive. Any apparent changes or modifications resulting therefrom remains within the scope of protection created by the present application.

**Claims**

1. A flexible power transformer, comprising at least a main transformer and a converter apparatus,

   wherein the main transformer comprises a primary winding and a plurality of secondary windings;
   the converter apparatus is connected in series between an end of the primary winding of the main transformer and an end of any one of the plurality of secondary windings of the main transformer, or the converter apparatus is connected in series between ends of any two of the plurality of secondary windings of the main transformer; and
   the converter apparatus is configured to adjust a voltage of each winding of the main transformer by adjusting an output voltage of the converter apparatus.

2. The flexible power transformer of claim 1, wherein the converter apparatus comprises a plurality of cascaded subunits, and the subunits are configured to adjust an output voltage level of the converter apparatus by changing a number of the cascaded subunits.

3. The flexible power transformer of claim 2, wherein the converter apparatus is configured to control a port voltage and a power flow of the flexible power transformer by controlling an amplitude and a phase of an output voltage on an inverter side of the converter apparatus.

4. The flexible power transformer of claim 2, wherein for each of the cascaded subunits, the subunit comprises a rectifier module, a dual active bridge module with a high-frequency isolation transformer, and an inverter module,

   wherein an input end of the rectifier module is connected to any one of the plurality of secondary windings, and an output end of the rectifier module is connected to an input end of the dual active bridge module with the high-frequency isolation transformer;
   an input end of the inverter module is connected to an output end of the dual active bridge module with the high-frequency isolation transformer, and an output end of the inverter module is connected to an end of another one of the plurality of secondary windings or the end of the primary winding;
   the rectifier module is configured to rectify an alternating current (AC) voltage provided by the secondary winding into a direct current (DC) voltage, and maintain a DC voltage of each module in the converter apparatus to be stable;
   the dual active bridge module with the high-frequency isolation transformer is configured to perform a DC voltage conversion, transmit a converted DC voltage to the inverter module, and electrically isolate each module in the converter apparatus; and
   the inverter module is configured to invert the converted DC voltage to an AC voltage, and transmit the AC voltage to the end of the another one of the plurality of secondary windings or the end of the primary winding.

5. The flexible power transformer of claim 4, wherein the inverter module is further configured to change a voltage of the primary winding of the main transformer and a voltage of each secondary winding of the main transformer by controlling a phase and an amplitude of an output voltage of the inverter module.

6. The flexible power transformer of claim 4, wherein the dual active bridge module with the high-frequency isolation transformer has a plurality of ports, and the plurality of ports are configured to provide a plurality of power exchange interfaces outward.

7. The flexible power transformer of claim 4, wherein an operating frequency of a high-frequency transformer in the dual active bridge module with the high-frequency isolation transformer is determined by a capacity, an occupation, and characteristics of an adopted power component of the converter apparatus.

8. The flexible power transformer of claim 4, wherein the output end of the inverter module is connected in series between the end of the winding and a neutral point.

9.   The flexible power transformer of any one of claims 1 to 8, further comprising a bypass apparatus connected in parallel at both ends of an inverter side of the converter apparatus.

10.  The flexible power transformer of claim 9, wherein the bypass apparatus comprises an anti-parallel thyristor and a mechanical switch.

Main transformer 1

FIG. 1

**FIG. 2**

Primary winding 11

FIG. 3

**FIG. 4**

**FIG. 5**

**FIG. 6**

## INTERNATIONAL SEARCH REPORT

| International application No. |
| --- |
| **PCT/CN2023/075686** |

| A. CLASSIFICATION OF SUBJECT MATTER |
| --- |
| H02J 3/12(2006.01)i;H02J 3/06(2006.01)i;H02M 5/12(2006.01)i |
| According to International Patent Classification (IPC) or to both national classification and IPC |

| B. FIELDS SEARCHED |
| --- |
| Minimum documentation searched (classification system followed by classification symbols) |
| IPC: H02J, H02M, H01F |
| Documentation searched other than minimum documentation to the extent that such documents are included in the fields searched |
| |
| Electronic data base consulted during the international search (name of data base and, where practicable, search terms used) |
| CNTXT, ENTXT, ENTXTC, WPABS, DWPI, CNKI: 变压器, 调压, 电压, 调节, 绕组, 线圈, 换流, switch, transformer, transistor, voltage, adjust+, winding, coil, current, convert |

| C. DOCUMENTS CONSIDERED TO BE RELEVANT | | |
| --- | --- | --- |
| Category* | Citation of document, with indication, where appropriate, of the relevant passages | Relevant to claim No. |
| PX | CN 114884071 A (SMART GRID RESEARCH INSTITUTE CO., LTD. OF STATE GRID. et al.) 09 August 2022 (2022-08-09) claims 1-10 | 1-10 |
| X | CN 111525583 A (GLOBAL ENERGY INTERCONNECTION RESEARCH INSTITUTE CO., LTD. et al.) 11 August 2020 (2020-08-11) description, paragraphs [0005]-[0078], claims 1-14, and description, figures 1-8 | 1-10 |
| X | CN 111525582 A (GLOBAL ENERGY INTERCONNECTION RESEARCH INSTITUTE CO., LTD. et al.) 11 August 2020 (2020-08-11) description, paragraphs [0006]-[0069], claims 1-10, and description, figures 1-4 | 1-10 |
| A | CN 105006978 A (ELECTRIC POWER RESEARCH INSTITUTE, CHINA SOUTHERN POWER GRID et al.) 28 October 2015 (2015-10-28) entire document | 1-10 |
| A | JP 2021114813 A (DAIHEN CORP.) 05 August 2021 (2021-08-05) entire document | 1-10 |
| A | RO 122237 B1 (PLEŞCA, A. T.) 27 February 2009 (2009-02-27) entire document | 1-10 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 May 2023** | **12 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/075686**

| Patent document cited in search report | | | Publication date (day/month/year) | Patent family member(s) | | | Publication date (day/month/year) |
|---|---|---|---|---|---|---|---|
| CN | 114884071 | A | 09 August 2022 | None | | | |
| CN | 111525583 | A | 11 August 2020 | CN | 212518415 | U | 09 February 2021 |
| CN | 111525582 | A | 11 August 2020 | CN | 212063498 | U | 01 December 2020 |
| CN | 105006978 | A | 28 October 2015 | None | | | |
| JP | 2021114813 | A | 05 August 2021 | None | | | |
| RO | 122237 | B1 | 27 February 2009 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210691872